(19) Europäisches Patentamt

European Patent Office

Office européen des brevets

(11) Veröffentlichungsnummer: **0 572 442 B1**

(12) **EUROPÄISCHE PATENTSCHRIFT**

(45) Veröffentlichungstag der Patentschrift: **06.09.95**

(51) Int. Cl.⁶: **B21B 37/16**, G05B 13/04

(21) Anmeldenummer: **92903979.0**

(22) Anmeldetag: **14.02.92**

(86) Internationale Anmeldenummer:
**PCT/DE92/00104**

(87) Internationale Veröffentlichungsnummer:
**WO 92/14563 (03.09.92 92/23)**

(54) **REGELUNG EINES WARM- UND/ODER KALTWALZPROZESSES.**

(30) Priorität: **20.02.91 DE 4105321**

(43) Veröffentlichungstag der Anmeldung:
**08.12.93 Patentblatt 93/49**

(45) Bekanntmachung des Hinweises auf die
Patenterteilung:
**06.09.95 Patentblatt 95/36**

(84) Benannte Vertragsstaaten:
**AT BE DE GB IT**

(56) Entgegenhaltungen:
DE-A- 3 026 229
DE-A- 4 040 360

INTERNATIONAL FEDERATION OF AUTOMA-
TIC CONTROL. Proceedings of the IFAC. 6th
world congress; Boston, 24 -30 August 1975;
Instrument Society of America, Pittsburgh,
Pennsylvania, US, 1975; Part 2 - Applications;
Session 46.1, Seiten 1-8; H. W. SEYFRIED et
al.: 'Application of adaptive control in rolling
mill area, especially for plate mills'

IRON AND STEEL ENGINEER. Bd. 64, Nr. 10,
Oktober 1987, PITTSBURGH US Seiten 45 -
49; W. SMITH: 'Modernization of a tandem
cold mill with distributed digital control'

(73) Patentinhaber: **SIEMENS AKTIENGESELL-
SCHAFT**
**Wittelsbacherplatz 2**
**D-80333 München (DE)**

(72) Erfinder: **SÖRGEL, Günter**
**Zaunkönigweg 8**
**D-8500 Nürnberg 60 (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 572 442 B1

## Beschreibung

Die Erfindung betrifft eine Regelung für einen Walzprozeß mit Reglern, die auf Antriebe von Walzgerüsten einer Walzstraße wirken, mit Meßgeräten an der Walzstraße zur Erfassung von Meßwerten von Prozeßgrößen und mit einer Recheneinheit, in der mit Hilfe von Modellgleichungen Sollwerte für die Regler bestimmt werden, wobei in Abhängigkeit von den Meßwerten der Prozeßgrößen eine Adaption von Modellgleichungsparametern erfolgt.

Eine derartige Regelung von Warm- und/oder Kaltwalzprozessen, die mit Einzelregelkreisen und Parameteradaption der Modellgleichungen für die Ermittlung der Reglersollwerte arbeitet, ist aus dem Fachartikel von H.W. Seyfried et al in Proceedings of the IFAC, 6th world congress, Boston 24-30 August 1975; Instrument Society of America, 1975, Part 2 - Applications, Session 46-1, Seiten 1-8, bekannt. Die bekannte Regelung arbeitet in kontinuierlich ablaufenden Walzprozessen äußerst zufriedenstellend. Von Nachteil ist jedoch, daß bei Anforderungsänderungen die Zeit für das Erreichen des neuen Betriebszustandes relativ lang ist. Dies bedeutet, daß unter Umständen vor Erreichen des neuen Betriebszustandes mehrere Bänder o.ä. mit Fehlabmessungen oder Fehltemperaturen gewalzt werden. Der Grund liegt darin, daß bei der bekannten Regelung die Parameteradaption in Lernschritten, also schrittweise durchgeführt wird.

Es ist Aufgabe der Erfindung, eine Regelung für Warm- und/oder Kaltwalzprozesse anzugeben, die bei Anforderungsänderungen sehr schnell zu einem toleranzgerechten Produkt fuhrt, insbesondere zu einem verwertbaren Produkt unmittelbar nach der Anforderungsänderung.

Gemäß der Erfindung wird die Aufgabe dadurch gelöst, daß bei der Regelung der eingangs angegebenen Art die Recheneinheit bei Anforderungsänderungen Abweichungen zwischen den Meßwerten und den Werten aus dem vorhergehenden Walzprozeß ermittelt und daraus mit Hilfe der Modellgleichungen Einstellwerte berechnet, die die Sollwerte ergänzen.

Durch diese Relativadaption ist ein wesentlich schnelleres Erreichen des Toleranzbereiches für das gefertigte Produkt als bisher möglich. Dies gilt insbesondere, wenn das Walzen einer neuen Abmessung, einer neuen Qualität oder eines neuen Gefügezustandes zunächst im Handbetrieb erfolgt oder wenn das Walzprogramm, wie üblich, derart gestaltet ist, daß aufeinanderfolgende Walzlose entsprechend ihrer Unterschiede gestaffelt sind.

Weitere Vorteile und Einzelheiten ergeben sich aus der nachfolgenden Beschreibung eines Ausführungsbeispiels anhand der Zeichnung und in Verbindung mit den Unteransprüchen. Im einzelnen zeigen:

FIG 1    eine schematisch dargestellte Walzstraße und ihre Regelstruktur und

FIG 2    ein schematisiert dargestelltes Arbeits- und Stutzwalzenpaar mit Angabe der für die Regelung wichtigen walztechnischen Größen.

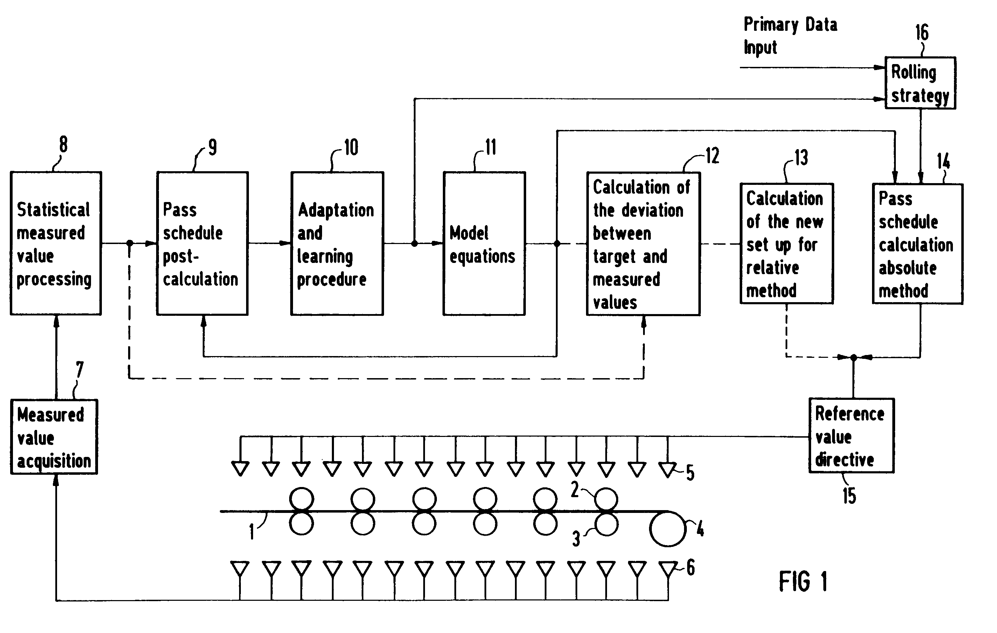

In Fig 1 bezeichnet 1 das Walzgut, insbesondere ein Warm- oder Kaltband sowie 2 und 3 die Arbeitswalzen eines Walzgerüstes. Mit 4 ist der Haspel bezeichnet, auf dem das gewalzte Produkt aufgewickelt wird. 6 bezeichnet die Meßgeräte an der Walzstraße, z.B. an den Walzgerüsten oder auch zwischen den Gerüsten. Die einzelnen Regler sind mit 5 bezeichnet, sie wirken auf die verschiedenen Gerüstantriebe, z.B. für die Anstellung, das Drehmoment etc. Die Absolutregelung für den normalen Produktionsablauf ist nun, entsprechend den vollausgezogenen Linien in FIG 1, wie folgt:

Die Meßwerte aus den Geräten 6 werden zunächst einer Meßwertanpassung 7 unterzogen, danach einer statistischen Aufbereitung und Beurteilung (Vertrauensintervall) 8. Die angepaßten und aufbereiteten Meßwerte werden einer Nachberechnung 9 unterzogen. Durch die Nachberechnung 9 werden die wesentlichen Prozeßgrößen, z.B. die Enddicke, die Endtemperatur, die Dickenabnahme, die Gerüstkraft, die Antriebskraft, die relative Dickenabnahme etc., diese regeltechnisch optimiert, berechnet. Entsprechend den Standardabweichungen der aufbereiteten Meßwerte wird vorteilhaft die Verstärkung der entstandenen feedback-Kreise verändert. Die nachberechneten Werte werden einer üblichen Adaptions- und Lernprozedur 10 unterzogen, und danach wird die Modellgleichungsrechnung 11 der Sollwerte für die Regler 5 durchgeführt. Hiernach erfolgt auch die sehr wesentliche Rückführung der ermittelten Werte zur Nachberechnung 9, um die notwendige Adaption und die erforderlichen Lernschritte durchführen zu können.

Die Primärdaten werden in das Leitsystem 16 eingegeben und mit den Ergebnissen aus der Modellgleichungsrechnung einer Absolutwertberechnung 14 unterzogen, aus der dann über 15 die neuen Sollwerte für die Einzelregler 5 ermittelt werden.

Mit der Relativadaption, die den unterbrochenen Linien folgt, wird die Adaption bei Anforderungsänderungen dadurch beschleunigt, daß die aus der Meßwertanpassung 7 erhaltenen Werte in 8 lediglich einer Plausibilitätskontrolle unterzogen werden und dann unmittelbar der Berechnung für die Abweichung zwischen dem aus dem Handbetrieb oder vom vorhergehenden Walzprozeß stammenden Werte in 12 zugeführt werden. Anschließend werden die neuen Einstellwerte für den ersten Produktionsvorgang nach dem Sprung durch die Anforderungsänderungen in 13 berechnet. Die neuen Einstellwerte werden zu den Sollwerten aus der Absolutadaption addiert und ergeben nach ihrer Umformung in 15 die vorteilhaft wesentlich schneller ermittelten neuen Einstellwerte für die Einzelregler 5.

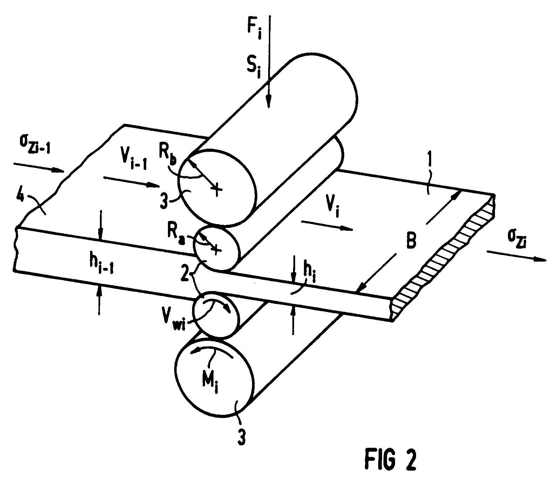

In FIG 2 sind die Bandgrößen vor dem Gerüst mit i-l und hinter dem Gerüst mit i bezeichnet. Die Bandgeschwindigkeit beträgt vor dem Gerüst $V_{i-l}$ und hinter dem Gerüst $V_i$. Die an dem Gerüst und dem Band vorliegenden Größen und Kräfte verhalten sich bei dem Durchgang durch das Gerüst wie in den folgenden, aus dem eingangs erwähnten Fachartikel von H.W. Seyfried bekannten, Gleichungen wiedergegeben.

1) $h_i \cdot V_i = h_{i-l} \cdot V_{i-l}$
   (Volume Constancy)

2) $V_i = (l + {}_i + r_{vi}) \cdot V_{wi}$
   (Forward Slip)

3) $S_i = h_i - C_i(B) \cdot F_i$ - Roll Flattening $(F_i,h_i,h_{i-l})$
   - Bearing Oil Film Thickness $(F_i,V_i) + r_{Si}$
   (Screwdown)

4) $F_i = f(r_{fi},K_f,B,h_{i-l},h_i,T_i, z_{i-l}, z_i,V_i, )$
   (Roll Separating Force)

5) $M_i = m(r_{mi},K_f,B,h_{i-l},h_i,T_i, z_{i-l}, z_i, V_i, )$
   (Rolling Torque)

6) $T_i = t(r_{ti}, T_{i-l}, M_{i-l}$
   (Heat Losses (Rolling Time, Transport Time))
   (Initial Pass Temperature, Deformation Energy)

Aus den einzelnen Gleichungen ergibt sich der Zusammenhang der einzelnen Größen, die in den Adaptionsgleichungen der Ansprüche 6,7 und 8 verwendet werden.

Die vorstehend beschriebene Zweistufenadaption bei Anforderungsänderungen, die zu einer erheblich schnelleren Anpassung der Einzelregler 5 an die geänderten Anforderungen führt, ergibt zumeist, daß nach den Anforderungsänderungen bereits das im nächsten Produktionsvorgang hergestellte Produkt toleranzgerecht ausfällt. Dies ist ein erheblicher Vorteil, der durch eine einfache Programmergänzung unter Verwendung der erfindungsgemäßen Lehre erreicht werden kann. Die Recheneinheit und die sonstigen Bestandteile der Regelung können vorteilhaft unverändert bleiben. Das Auslaufen der Relativ-Adaptionsvorgänge ist unmerklich, da ihre Werte desto mehr gegen Null konvergieren, je mehr die Absolutadaption zutreffende Werte liefert.

Mit den bestehenden Einrichtungen und Programmteilen kann also durch eine einfache Programmergänzung eine nicht unbeträchtliche Verbesserung der Toleranzen einer Walzstraße erreicht werden. Die Vorteile sind insbesondere dann gravierend, wenn zum Zweck einer geringen Lagerhaltung eine JUST-IN-TIME-Produktion erreicht werden soll, also häufige Anforderungsänderungen vorkommen.

Die Erfindung ist für einen Bandwalzprozeß entwickelt worden. Es versteht sich, daß ihre Vorteile jedoch auch bei anderen, entsprechend strukturierten Regelungen erreicht werden, also beim Rohrwalzen, Profilwalzen etc.

**Patentansprüche**

1.  Regelung für einen Walzprozeß mit Reglern, die auf Antriebe von Walzgerüsten einer Walzstraße wirken, mit Meßgeräten an der Walzstraße zur Erfassung von Meßwerten von Prozeßgroßen und mit einer Recheneinheit, in der mit Hilfe von Modellgleichungen Sollwerte für die Regler bestimmt werden, wobei in Abhängigkeit von den Meßwerten der Prozeßgroßen eine Adaption von Modellgleichungsparametern erfolgt,
    **dadurch gekennzeichnet**,
    daß die Recheneinheit bei Anforderungsänderungen Abweichungen zwischen den Meßwerten und den Werten aus dem vorhergehenden Walzprozeß ermittelt und daraus mit Hilfe der Modellgleichungen Einstellwerte berechnet, die die Sollwerte ergänzen.

2.  Regelung nach Anspruch 1,
    **dadurch gekennzeichnet**,
    daß die Einstellwerte zu den Sollwerten hinzuaddiert werden.

3.  Regelung nach Anspruch 1 oder 2,
    **dadurch gekennzeichnet**,
    daß die Ergänzung der Sollwerte durch die Einstellwerte beim Übergang von Handbetrieb auf Automatikbetrieb, bei Enddickenänderungen und/oder bei Temperaturänderungen erfolgt.

**Claims**

1.  Control system for a rolling process having controllers which act on drives of roll stands of a rolling train, having measuring devices on the rolling train for the acquisition of measured values of process variables and having an arithmetic unit in which target values for the controllers are determined with the aid of model equations, with an adaptation of model equation parameters being effected as a function of the measured values of the process variables, characterised in that in the event of changes in requirements the arithmetic unit determines deviations between the measured values and the values from the previous rolling process and with the aid of the model equations calculates therefrom setting values which complement the target values.

2. Control system according to claim 1, characterised in that the setting values are added to the target values.

3. Control system according to claim 1 or 2, characterised in that the target values are complemented by the setting values in the case of the change-over from manual operation to automatic operation, in the case of changes in final thickness and/or in the case of changes in temperature.

**Revendications**

1. Régulation d'un processus de laminage avec des régulateurs, agissant sur les systèmes d'entraînement des cages de laminoir d'un train de laminoir, avec appareils de mesure sur le train de laminoir destinés à la saisie des valeurs de mesure du processus et avec une unité de calcul dans laquelle on détermine des valeurs de consigne pour les régulateurs à l'aide d'équations types, une adaptation des paramètres des équations types étant effectuée en fonction des valeurs de mesure du processus, caractérisée en ce que l'unité de calcul détermine, en cas de modification des critères imposés, les écarts entre les valeurs de mesure et les valeurs du processus de laminage précédent et calcule de ce fait à l'aide des équations types, les valeurs de réglage venant compléter les valeurs de consigne.

2. Régulation selon la revendication 1, caractérisée en ce que les valeurs de réglage sont ajoutées aux valeurs de consigne.

3. Régulation selon la revendication 1 ou 2, caractérisée en ce que la mise à jour des valeurs de consigne par les valeurs de réglage, a lieu en cas de passage du fonctionnement manuel en fonctionnement automatique, en cas de modifications de l'épaisseur finale et/ou de variations de température.

FIG 1

8 Statistical measured value processing

9 Pass schedule post-calculation

10 Adaptation and learning procedure

11 Model equations

12 Calculation of the deviation between target and measured values

13 Calculation of the new set up for relative method

14 Pass schedule calculation absolute method

16 Rolling strategy

Primary Data Input

7 Measured value acquisition

15 Reference value directive

EP 0 572 442 B1

FIG 2